# EUROPEAN PATENT SPECIFICATION

(11) **EP 0 343 736 B1**
(45) Date of publication and mention of the grant of the patent: **02.03.1994**
(21) Application number: 89201294.9
(22) Date of filing: 19.05.1989
(51) Int. Cl.: B29C 33/00, B29C 67/14

(54) **Process for reducing mould cycle time**
Verfahren zum Verkürzen der Formgebungstaktzeit
Procédé pour réduire le temps du cycle de moulage

(30) Priority: 23.05.1988 US 197738
(43) Date of publication of application: 29.11.1989
(73) Proprietor: SHELL INTERNATIONALE RESEARCH MAATSCHAPPIJ B.V., 2596 HR Den Haag (NL)
(72) Inventor: Douglas, Paul Isaiah, The Woodlands Texas 77380 (US)

(56) References cited:
- EP-A- 0 322 042
- EP-A- 0 348 831
- WO-A-87/01650
- DE-A- 2 162 174
- GB-A- 1 024 582
- PATENT ABSTRACTS OF JAPAN, vol. 8, no. 32 (M-275)[1469] 10th February 1984;& JP-A-58 188 642 (HITACHI SEISAKUSHO K.K.) 04-11-1983

## Description

The invention relates to a process for reducing cycle time in the moulding of fibre-reinforced thermoset articles.

Various moulding methods are discussed in chapters 4 and 5 of the book entitled, Handbook of Reinforced Plastics, Society of the Plastics Industry, Inc., copyright 1964, published by the Reinhold Publishing Corporation, Library of Congress Catalog Card No. 64-15205. Whenever contact moulding, bag moulding, or similar procedures are being used to fabricate articles of manufacture formed from fibre-reinforced resins, single die moulds will typically be required.

To economically produce these articles using any type of mould, the rate of article production must be maximized to allow the quick recovery of the capital costs associated with the purchase of the mould. The mould cycle time must be minimized.

In the case of an article that incorporates fibres or filaments within the thermoset composition, it is desirable to quickly wet these materials. In the case of an article that comprises a preshaped member of fibre-reinforcement it is desirable to have the thermosetting resin composition flood all internal voids and interstices within the fibre-mass quickly such that the curing time of the resin may be kept to a minimum.

A process therefore needs to be developed that permits rapid flow of the resin into the mould and which permits rapid wetting of these fibres.

The present invention provides a process for moulding a thermoset article of manufacture including the steps of:
- providing a mould having a surface, said mould surface having at least one opening defined downwardly therein,
- locating heat-recoverable member means within said opening, said member means previously having been deformed from an expanded first configuration to a second configuration, said member means, when subjected to a suitable temperature of recovery, being capable of recovering to or towards its expanded first configuration, the second configuration thereby defining an opening to permit flowing of thermosetting resin composition through said opening into the mould,
- inserting a preshaped member of fibre-reinforcement in the mould,
- closing the mould,
- flowing thermosetting resin composition into the mould,
- heating said heat recoverable member means to expand said heat recoverable member means to obtain said first configuration, and to form a surface which is flush with said mould surface,
- retaining said thermosetting composition in said mould for a sufficient period to dimensionally stabilize the article of manufacture,
- opening the mould, and removing said article from said mould.

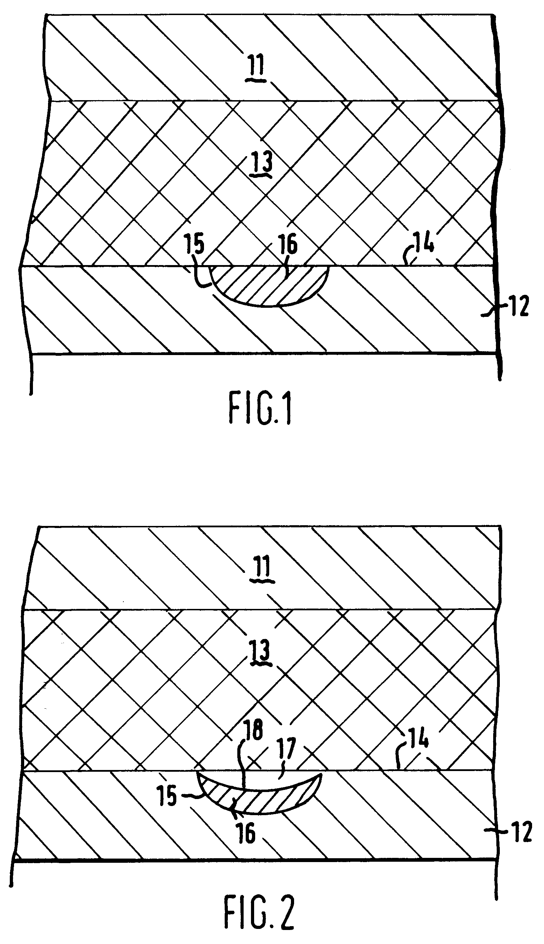

These and other features and advantages of the present invention will become apparent from the following detailed description, wherein reference is made to Figures 1 and 2.

Fig. 1 is a schematic representation in a side view in partial cross section showing the deformable member means positioned within an opening defined downwardly within the mould section.

Fig. 2 is a schematic representation in a side view and partial cross section of the same member now defining an opening for flow of a thermosetting resin composition into the preshaped member of fibre-reinforcement.

In Figs. 1 and 2, 11 and 12 represent the upper and lower parts of a mould, respectively, and 13 represents a preshaped member of fibre-reinforcement.

The mould can be seen to comprise a surface 14 having at least one opening 15 defined downwardly therein. Surface 14 of the mould preferably coincides with the lower surface of the preshaped member of fibre-reinforcement. Opening 15 can be embodied in the form of a longitudinal groove or channel which in the figures is shown in cross-section. More than one opening can be present in the lower mould surface. The mould is referred to in a generic sense wherein it is understood to include structures associated with vacuum bag moulding, pressure bag moulding, autoclave moulding, vacuum injection moulding, cable clave moulding or the like.

Deformable member means 16, located within the opening 15, comprise in the first configuration a tube exactly fitting in the groove or channel, thus forming an upper surface which is flush with the surface of the mould.

Deformable member means 16 are connected via means not shown with means for supplying heat to member means 16.

Fig. 2 shows the member means 16 in the second configuration. An opening 17 is provided, through which thermosetting resin composition can be supplied to the internal mould volume to fill the free volume of the preshaped member of fibre-reinforcement. Heating of member 16 causes expansion of its upper surface 18 to a position which is flush with mould surface 14. Thus, opening 17 is closed and no more thermosetting resin can be supplied to the interior of the mould.

Suitable thermosetting resins are selected from polyester resins, phenolic resins, vinyl ester resins, epoxy resins, polyurethane resins, polyisocyanurate resins, urethane resins, and polyamide resins.

The preshaped fibre-reinforcement can comprise fibreglass cloth, tape, woven roving, or any other collection of fibres, cloth, or material used to reinforce the resin. Preshaping to closely fit the internal volume of the mould can be carried out by any known method, compressing being preferred. The flow of the thermosetting resin beneath certain portions of the filament member accelerates supply of resin to the filament member thereby allowing shortening the moulding cycle time.

The moulding may comprise at least one thermosetting resin injection port typically located centrally within the lower surface area of the mould. To allow the rapid supply of the resin over a relative large portion of the lower mould surface area the openings 15 preferably extend radially outward away from that port. It should be well recognized that many other flow patterns may be used to accomplish the same mechanical result. For example, the openings 15 may comprise a relatively large series of linear parallel flow channels, evenly spread over the lower surface area of the mould.

In this Specification the heat-recoverable member means are understood to mean a polymeric or metallic article which has been deformed from a first configuration to a second configuration and which solely upon being subjected to a suitable temperature tends to recover to or towards its first configuration.

Polymeric articles may be made capable of being rendered heat-recoverable by, for example, cross-linking with irradiation with beta or gamma rays or by chemical means or by a combination thereof. Examples of heat-recoverable materials may be found in US-A-2,027,962 and GB-A-1,529,351.

Especially useful materials include, for example, the olefin polymers of which are preferred high density polyethylene, polybutene-1, poly-4-methyl pentene and fluorinated polyolefins for example, ethylene-trifluorochloro ethylene copolymers and vinylidene fluoride polymers, especially pvf₂ and blends thereof of which there are preferred the fluorinated olefin blends as described and claimed in GB-A-1,120,131, and polyesters, for example, polyethylene terephthalate, polytetramethylene terephthalate for example that treated as described and claimed in DE-A-2,448,414, or GB-A-1,486,207, polyamides, polyphenylene oxide and -sulphide, blends of polyethylene oxide with styrene silicon-carbonate block copolymers, polyaryl sulphones, polyether sulphones, polycarbonates especially those derived from bisphenyl-A polyamides, especially those described and claimed in GB-A-1,287,932 epoxy resins and blends of one or more of the above-mentioned polymeric materials either with each or with other polymeric materials.

To these materials there may be added any of the conventional additives, for example, antioxidants, flame retardants, reinforcing fillers, cross-linking agents, pigments, fungicides and the like. As reinforcing fillers there may be especially mentioned glass fibres.

Of the metals capable of being rendered heat-recoverable there may be mentioned, as described in GB-A-2,090,076 "Memory metals" sometimes also called "Memory Alloys" which are metallic materials that exhibit changes in strength and configurational characteristics on passing through a transition temperature, in most cases the transition temperature between the martensitic and austenitic states, and can be used to make heat-recoverable articles by deforming an article made from them whilst the metal is in its martensitic, low temperature state. The article will retain its deformed configuration until it is warmed above the transition temperature to the austenitic state when it will return or attempt to return towards its original configuration. It will be understood that the heat-recoverable article is capable of returning towards its original configuration without the further application of outside force. The deformation used to place the material in the heat unstable configuration is commonly referred to as thermally recoverable plastic deformation and can also, in certain cases, be imparted by introducing strains into the article above the transition temperature, whereupon the article assumes the deformed configuration on cooling through the transition temperature. It should be understood that the transition temperature may be a temperature range and that, as hysteresis usually occurs, the precise temperature at which transition occurs may depend on whether the temperature is rising or falling. Furthermore, the transition temperature is a function of other parameters, including the stress applied to the material, the temperatures rising with increasing stress.

Amongst such memory metals there may especially be mentioned various alloys of titanium and nickel which are described, for example, in US-A-3,174,851; 3,351,463; 3,753,700; 3,759,552, GB-A-1,327,441 and 1,327,442 and NASA Publication SP 110, "55-Nitinol-The Alloy with a Memory, etc." (U.S. Government Printing Office, Washington, D.C. 1972). The property of heat recoverability has not, however, been solely confined to such titanium-nickel alloys. Thus, for example, various beta-brass alloys have been demonstrated to exhibit this property in, e.g. N. Nakanishi et al, Scripta Metallurgica 5 433-440 (Pergamon Press 1971), US-A-3,783,037; 4,019,925; 4,144,104; 4,146,392; 4,166,739 and 4,035,007, and such materials may be doped to lower their transition temperature to cryogenic regimes by known techniques. Similarly, 304 stainless steels have been shown to enjoy such characteristics E. Enami et al, id, at pp. 663-68.

## Claims

1. A process for moulding a thermoset article of manufacture including the steps of:
- providing a mould having a surface, said mould surface having at least one opening defined downwardly therein,
- locating heat-recoverable member means within said opening, said member means previously having been deformed from an expanded first configuration to a second configuration, said member means, when subjected to a suitable temperature of recovery being capable of recovering to or towards its expanded first configuration, the second configuration thereby defining an opening to permit flowing of thermosetting resin composition through said opening into the mould,
- inserting a preshaped member of fibre-reinforcement in the mould,
- closing the mould,
- flowing thermosetting resin composition into the mould,
- heating said heat recoverable member means to expand said heat recoverable member means to obtain said first configuration and to form a surface which is flush with said mould surface,
- retaining said thermosetting composition in said mould for a sufficient period to dimensionally stabilize the article of manufacture,
- opening the mould, and removing said article from said mould.

## Patentansprüche

1. Verfahren zum Formen eines wärmegehärteten Herstellungsgegenstandes, umfassend die Schritte des
- Schaffens einer Form, die eine Fläche hat, wobei die Formfläche wenigstens eine in ihr nach unten gebildete Öffnung hat,
- Anordnens einer Einrichtung mit einem durch Wärme wiederherstellbaren Teil in der Öffnung, wobei die Einrichtung mit diesem Teil zuvor aus einer ausgedehnten ersten Konfiguration zu einer zweiten Konfiguration verformt worden ist und die Einrichtung mit dem Teil, wenn sie einer zweckentsprechenden Wiederherstellungstemperatur unterworfen wird, in der Lage ist, ihre ausgedehnte erste Konfiguration wiederherzustellen oder sich in Richtung gegen diese wiederherzustellen, wodurch die zweite Konfiguration eine Öffnung bestimmt, um das Fließen einer wärmehärtenden Harzzusammensetzung durch die Öffnung hindurch in die Form zu ermöglichen,
- Einsetzens eines vorgeformten Teils aus einer Faserverstärkung in die Form,
- Schließens der Form
- Fließenlassens der wärmehärtenden Harzzusammensetzung in die Form,
- Erhitzens der Einrichtung mit dem durch Wärme wiederherstellbaren Teil, um die Einrichtung mit dem durch Wärme wiederherstellbaren Teil auszudehnen, um die erste Konfiguration zu erhalten und eine Fläche zu bilden, die mit der Formfläche fluchtet,
- Haltens der wärmehärtenden Zusammensetzung in der Form während einer Periode, die ausreichend ist, um den Herstellungsgegenstand zu stabilisieren,
- Öffnens der Form und Herausnehmens des Gegenstandes aus der Form.

## Revendications

1. Un procédé pour le moulage d'un article thermodurci comprenant les étapes selon lesquelles :
- on prévoit un moule ayant une surface, cette surface du moule comportant au moins un creux dirigé vers le bas,
- on place dans ce creux un élément susceptible de reprise à chaud, cet élément ayant été préalablement déformé d'une première configuration expansée à une seconde configuration, cet élément, quand il est soumis à une température appropriée de reprise, étant capable de revenir à ou vers sa première configuration expansée, la seconde configuration définissant ainsi une ouverture pour permettre l'écoulement de la composition de résine thermodurcissable par cette ouverture dans le moule,
- on introduit dans le moule un élément préformé de renforcement par fibres,
- on ferme le moule,
- on fait couler une composition de résine thermodurcissable dans le moule,
- on chauffe l'élément susceptible de reprise à chaud de manière à causer une expansion de cet élément susceptible de reprise à chaud pour qu'il revienne à sa première configuration et forme une surface dans le même plan que la surface du moule,
- on maintient la composition thermodurcissable dans le moule pendant une période suffisante pour stabiliser dimensionnellement l'article manufacturé,
- on ouvre le moule et on enlève l'article du moule.
